# EUROPÄISCHE PATENTSCHRIFT

(11) **EP 1 082 240 B1**
(45) Veröffentlichungstag und Bekanntmachung des Hinweises auf die Patenterteilung: **13.04.2005**
(21) Anmeldenummer: 00916816.2
(22) Anmeldetag: 11.03.2000
(51) Int. Cl.: B60S 1/52, F16K 15/14, F16K 7/04

(54) **SPRITZDÜSE FÜR EINE SCHEIBENWASCHANLAGE**
SPRAY NOZZLE FOR A WINDSCREEN WASHING SYSTEM
BUSE DE PULVERISATION POUR UN SYSTEME DE LAVAGE DE VITRES

(30) Priorität: 23.03.1999 DE 19912975
(43) Veröffentlichungstag der Anmeldung: 14.03.2001
(73) Patentinhaber: ROBERT BOSCH GMBH, 70442 Stuttgart (DE)
(72) Erfinder: ZIMMER, Joachim, D-77880 Sasbach (DE); FLEISCHER, Claus, D-77815 Buehl (DE)
(86) Internationale Anmeldenummer: PCT/DE2000/000771
(87) Internationale Veröffentlichungsnummer: WO 2000/056583

(56) Entgegenhaltungen:
- EP-A- 0 908 651
- WO-A-98/01689
- DE-B- 1 106 622
- FR-A- 1 251 901
- FR-A- 2 781 743
- US-A- 3 955 594

## Beschreibung

### Stand der Technik

Die Erfindung geht von einer Spritzdüse für Scheibenwaschanlagen nach dem Oberbegriff des Anspruchs 1 aus.

Bekannte Scheibenwaschanlagen für Fahrzeuge werden in der Regel in Verbindung mit Scheibenwischern verwendet. Für Scheinwerfer reicht es in einigen Fällen aus, sie ohne Scheibenwischer, aber mit einem höheren Druck zu benutzen. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigemischt sind, mit Druck aus dem Wasserbehälter über Wasserleitungen zu den Spritzdüsen fördert. In der Regel sind die Spritzdüsen an einem Teil einer Fahrzeugkarosserie befestigt, beispielsweise an einer Motorhaube, einem Fensterrahmen oder dgl.

Weiterhin ist bereits bekannt, Spritzdüsen als zusätzliche Bauteile am Wischblatt zu befestigen und somit das Spritzwasser direkt mit kurzer Strahllänge auf den Wischbereich zu verteilen. Da das Spritzwasser auf einen Bereich in der Nähe des Wischblatts konzentriert ist und durch die Wischbewegung in kürzester Zeit wieder abgewischt wird, ist die Sicht durch das aufgebrachte Spritzwasser nur kurzzeitig behindert. Ein Nachteil solcher Systeme ist, daß Witterungseinflüsse, insbesondere Hagel und extreme Sonneneinwirkung, die flexiblen Teile dieser Anordnung, die zum Überbrücken der gelenkigen Bereiche zwischen Wischarm und Wischblatt notwendig sind, stark beeinflussen. Ferner frieren die Spritzdüsen und Wasserleitungen, die dem Fahrtwind ausgesetzt sind, bei Temperaturen unter dem Gefrierpunkt schnell zu, wenn nicht genügend Antigefriermittel dem Wasser zugemischt ist oder verdunstet und aus dem Spritzloch entweicht. Die eingefrorenen Wasserleitungen und Spritzdüsen sind in der Regel nur mit großem Aufwand wieder aufzutauen.

Zweckmäßigerweise besitzt die Spritzdüse ein nach außen hin öffnendes Rückschlagventil, das verhindert, daß die Wasserleitung sich bei längerer Nichtbenutzung der Waschanlage entleert oder Antigefriermittel nach außen austritt. Diese Rückschlagventile arbeiten größtenteils nach dem Feder/Kugel-System. Sie sollen verhindern, daß die Wasserleitung nur teilweise gefüllt und der Wärmeübergang vom Heizelement zum Wasser gestört ist. Ferner können Wasserreste örtlich überhitzt werden und verdampfen. Dadurch entstehen Kalkablagerungen, die im Laufe der Zeit die engen Kanäle in der Spritzdüse zusetzen.

Es ist ferner eine Spritzdüse mit einem elastisch aufweitbaren Düsenteil bekannt, Bosch Handelsprogramm 97/98, S. 29, das durch den Druck des Waschwassers öffnet und bei fehlendem Druck geschlossen ist. Das Spritzloch wird von lippenförmigen Teilen des Düsenteils gebildet, die im geschlossenen Zustand aufeinander liegen. Zwar wird hierbei das gesamte Waschwasservolumen bis zum Spritzloch eingeschlossen, jedoch ist es schwierig, eine definierte Spritzstrahlgeometrie und Spritzstrahlrichtung zu erreichen.

In einer älteren Patentanmeldung, DE 198 15 171.3, ist ein Wischarm beschrieben, an dessen Gelenkteil bzw. an einer mit dem Gelenkteil einstückig verbundenen Wischstange Spritzdüsen angeordnet sind. Diese befinden sich in einem Düsenkörper, der in einer Ausbuchtung des Gelenkteils mit einer Spritzöffnung für den Spritzstrahl untergebracht oder in einer seitlichen Halterung an der Wischstange nach unten vorstehend eingeklipst ist. Es können auch zwei Düsenkörper vorgesehen werden, die durch ein starres oder flexibles Verbindungsstück miteinander verbunden sind. Die Düsenkörper sind leicht austauschbar und gegenüber Umwelteinflüssen gut geschützt.

Im übrigen ergeben sich einfache Lösungen, indem die Düsenkörper einstückig und als Spritzgußteil aus Kunststoff hergestellt sind. Die Düsen sind entweder fest im Düsenkörper integriert oder über einen Kugelsitz einstellbar gelagert. Durch die am Wischarm verteilten Düsenkörper wird das Spritzwasser gut über den Wischbereich verteilt, insbesondere wenn ein Spritzstrahl in einem unteren Bereich direkt vor das Wischblatt gelenkt wird. Da sich durch die Anordnung kurze Strahllängen ergeben, kann der Fahrtwind selbst bei höherer Fahrgeschwindigkeit die Spritzwasserverteilung nur wenig beeinflussen.

Aus der WO-A-9801689 ist eine gattungsgemässe Spritzdüse für eine Kraftfahrzeugscheibe bekannt, bei dem ein Rückschlagventil in der Zuflussleitung für die Waschflüssigkeit angeordnet ist, um ein Entleeren der Leitung unter dem Einfluss von Schwerkraft zu verhindern. Der Schließkörper des Rückschlagventils besteht aus einem elastischen Schlauchstück, dessen Wände im geschlossenen Zustand dichtend aneinander liegen. Unter dem Einfluss des Drucks der Waschflüssigkeit dehnt sich der Schließkörper und gibt den Durchfluss frei. Der Schließkörper wird mit einem Flansch zwischen zwei ineinander steckbaren Teilen der Zuflussleitung gehalten und seine elastischen Wände legen sich im geöffneten Zustand an die Innenwände der Zuflussleitung an. Der Querschnitt der Zuflussleitung ist im Bereich der elastischen Wände um die Wandstärke der elastischen Wände vergrößert, sodass im geöffneten Zustand durch das Rückschlagventil keine Veränderung des Strömungsquerschnitts entsteht.

Aus der US-A-3 955 594 ist ein Rückschlagventil für eine Betonpumpe bekannt, bei der der Schließkörper aus einem elastischen Schlauchstück besteht, das zwischen einer Zuflussöffnung und einer Abflussöffnung einen Schließquerschnitt aufweist, in dem die Innenwände des Schlauchstücks aneinander liegen. Durch den Druck des Betons werden die Innenwände auseinander gedrückt, sodass der Beton das Rückschlagventil passieren kann. Fällt der Druck in der Zuflussleitung ab, schließt das Rückschlagventil. Der elastische Schließkörper ist in einem Ventilgehäuse untergebracht und kann im Bereich des Schließquerschnitts durch einen elastischen Kunststoffkörper von außen abgestützt sein, wobei der Kunststoff in den Zwischenraum zwischen dem Schließkörper und dem Ventilgehäuse eingespritzt ist.

### Vorteile der Erfindung

Die Erfindung sieht als Verschlußelement einen Teil der Wasserleitung vor, der in einem Bereich kurz vor dem Anschluß an den Düsenkörper elastisch und so nach innen geformt ist, daß er die Wasserleitung an dieser Stelle verschließt. Ein durch die Pumpe der Scheibenwaschanlage erzeugter Wasserdruck drückt den elastischen Teil der Wasserleitung an dieser Stelle nach außen und gibt damit eine Öffnung für das Spritzwasser frei. Nach einer weiteren Varianten der Erfindung drückt ein Federelement von außen auf die elastische Stelle der Wasserleitung und unterbricht den Durchfluß, bis ein definierter Druck erreicht wird. Das Federelement kann allein oder zusätzlich zu einer besonderen Gestaltung der Wasserleitung eingesetzt werden.

### Zeichnung

Weitere Vorteile ergeben sich aus der folgenden Zeichnungsbeschreibung.

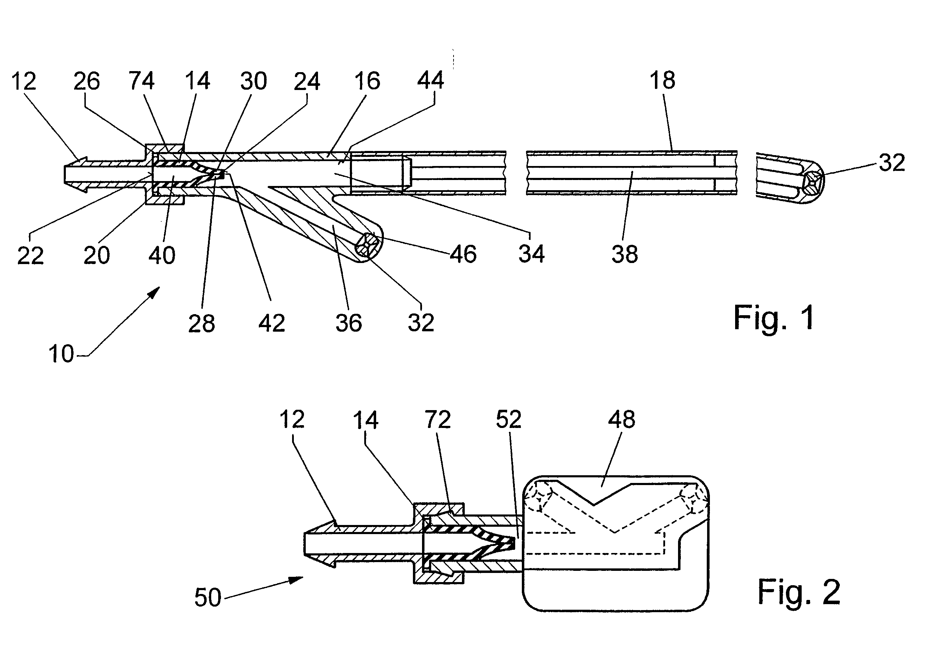

Die Figuren 1 und 2 zeigen Spritzdüsen die nicht zur Erfindung gehören.

Es zeigen:
- Fig. 1: einen Längsschnitt durch eine Spritzdüse mit einem Verschlußelement,
- Fig. 2: einen Längsschnitt durch eine Variante der Spritzdüse mit einem Verschlußelement,
- Fig. 3: einen Teillängsschnitt durch die Wasserleitung mit geschlossenem Verschlußelement,
- Fig. 4: einen Teillängsschnitt durch die Wasserleitung mit geöffnetem Verschlußelement und
- Fig. 5: einen Teillängsschnitt durch die Wasserleitung mit einem zusätzlichen Federelement.

Eine Spritzdüse 10 einer Scheibenwaschanlage besteht im wesentlichen aus einem Düsenkörper 16, der die Düsen 32 mit festen Spritzlöchern 20 und ein Verschlußelement 14 aufweist (Fig. 1). Mit Hilfe eines Anschlußstücks 12 ist der Düsenkörper 16 mit einer Wasserleitung der Scheibenwaschanlage verbunden, die zu einer nicht dargestellten Pumpe und zu einem Vorratsbehälter führt. Der Düsenkörper 16 besitzt einem Wasserkanal 34, von dem Spritzkanäle 36 und 38 zu den Düsen 32 abzweigen. Das Anschlußstück 12 ist in der Ausführung nach Fig. 1 durch eine Schweißverbindung 74, insbesondere durch Ultraschallschweißen, und in der Ausführung nach Fig. 2 durch eine Klipsverbindung 72 am Düsenkörper 16 druckdicht befestigt.

Im Wasserkanal 34 des Düsenkörpers 16 ist das Verschlußelement 14 angeordnet. Es ist in das dem Anschlußstück 12 zugewandten Ende des Düsenkörpers 16 eingesteckt. An seiner Anströmseite 22 besitzt das Verschlußelement 14 einen Rand 26, mit dem es zwischen dem Düsenkörper 16 und dem Anschlußstück 12 für die Wasserleitung gehalten wird. Der Rand 26 kann gleichzeitig als Dichtung dienen. An der Abströmseite 24 weist das Verschlußelement 14 Lippen 28 und 30 auf, die im drucklosen Zustand aneinander liegen und einen Durchlaßkanal 40 verschließen.

Beim Spritzvorgang öffnet ein durch die Pumpe erzeugter Wasserdruck den elastischen Durchlaß des Verschlußelements 14. Dabei dringt das Wasser von der Anströmseite 22 in den Durchlaßkanal 40 des Verschlußteils 14 und drückt gegen die Innenseite der Lippen 28 und 30, die im geschlossenen Zustand dichtend aneinander liegen, bis sie vollständig geöffnet sind. Die zunächst flachen Lippen 28 und 30 werden leicht gewölbt und es entsteht dabei eine Öffnung 42. Den äußeren Anschlag der Lippen 28 und 30 bildet die Wand 44 des Wasserkanals 34 im Düsenkörper 16. Beim Abschalten der Pumpe wird der Wasserdruck abgebaut und eine durch die Geometrie und Elastizität des Verschlußelements 14 gegebene Eigenspannung führt die Lippen 28 und 30 in die Ruheposition zurück, so daß sich die Öffnung 42 wieder verengt und der Durchlaßkanal 40 verschlossen ist.

Das Spritzwasser fließt beim Spritzvorgang durch die geöffneten Lippen 28 und 30 des Verschlußelements 14, durch den Wasserkanal 34 und weiter in die Spritzkanäle 36 und 38, die an ihren Enden je eine Düse 32 aufweisen. Die Düsen 32 werden in einem Kugelsitz 46 gehalten und sind in einem begrenzten Bereich einstellbar. Der Spritzkanal 38 führt durch ein an den Düsenkörper 16 angeschraubtes Rohr 18. Durch verschiedene Längen des Rohrs 18 können unterschiedliche Abstände zwischen den Düsen 32 erzeugt werden.

Fig. 2 zeigt eine Spritzdüse 50 mit einem Düsenkörper 48. Diese Variante weist ebenfalls ein Verschlußelement 14 als Rückschlagventil auf. Der Düsenkörper 48 besitzt einen Wasserkanal 52, von dem mindestens zwei Spritzkanäle 54 und 56 mit gleicher Länge in unterschiedliche Richtungen abzweigen. Diese Variante ist besonders für Scheibenwaschanlagen geeignet, die kleine Abstände zwischen den Düsen 32 erfordern. Die Spritzstrahlen können in einem begrenzten Bereich eingestellt werden, da die Düsen 32 in einem Kugelsitz 46 gehalten werden.

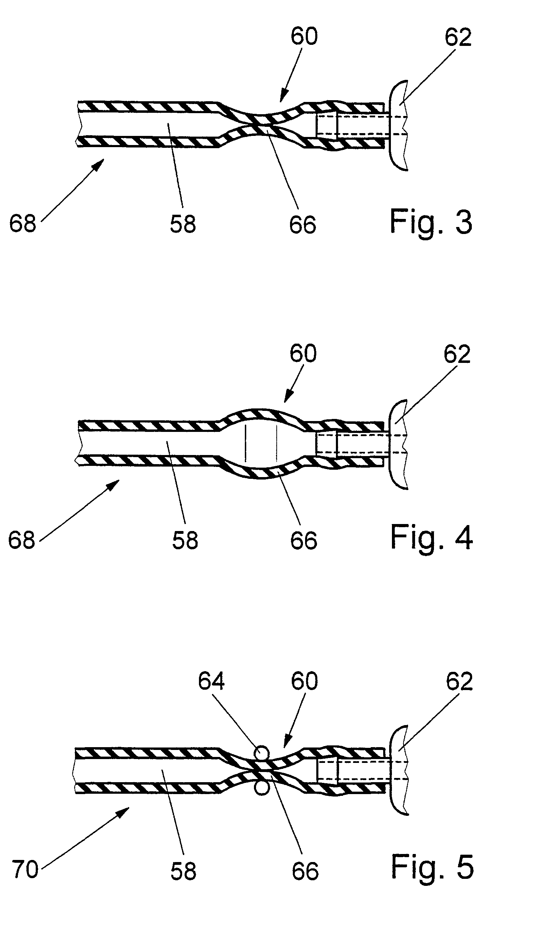

Bei der erfindungsgemässen Spritzdüse 68 wirkt die Wasserleitung 58 selbst als Verschlußelement. Die Wasserleitung 58 besitzt mindestens in einem Bereich kurz vor dem Anschlußstück 12 des Düsenkörpers 62 eine Verformung, eine elastisch aufweitbare Verschlußelement 60, die im drucklosen Zustand geschlossen ist (Fig. 3). Das Verschlußelement 60 wird durch Umformung, beispielsweise durch Warmprägen oder ähnliche Verfahren, erzeugt. Dabei wird die Wand 66 der Wasserleitung 58 so nach innen geformt, daß in diesem Bereich kein Wasserdurchlaß mehr erfolgen kann. Beim Spritzvorgang strömt Wasser mit einem von der Pumpe erzeugten Druck vom Vorratsbehälter durch die Wasserleitung 58 gegen das Verschlußelement 60 und drückt die elastische Wand 66 nach außen, so daß eine Öffnung für das durchströmende Spritzwasser entsteht.

Eine Spritzdüse 70 (Fig. 5) zeigt als Variante ein außen an dem Verschlußelement 60 angebrachtes Federelement 64, das einen definierten Schließdruck erzeugt. Das Federelement 64 kann allein oder zusätzlich zu einer plastischen Verformung der Wasserleitung eingesetzt werden. (Fig. 5).

## Patentansprüche

1. Spritzdüse (68, 70) mit einer Wasserleitung (58) und einem Düsenhörper (62) für eine Scheibenwaschanlage, die im Wasserzulauf vor einer Düse mit einem festen Spritzloch ein Verschlußelement mit einem elastischen Durchlaß aufweist, der durch den Druck des Waschwassers geöffnet wird, **dadurch gekennzeichnet, dass** die Wasserleitung (58) mindestens in einem Bereich kurz vor einem Anschlussstück des Dösenkörpers (62) elastisch und als Verschlusselement (60) geformt ist.

2. Spritzdüse (68,70) nach Anspruch 1, **dadurch gekennzeichnet, dass** die Wasserleitung (58) in dem elastischen Bereich durch ein Federelement (64) zusammengedrückt wird.

3. Spritzdüse (68,70) nach Anspruch 1 oder 2, **dadurch gekennzeichnet, dass** in ihrem Düsenkörper (62) mehrere Düsen (32) vorgesehen sind.

## Claims

1. Spray nozzle (68, 70) with a water pipe (58) and a nozzle body (62) for a windscreen washing system, which has, in the water inlet upstream of a nozzle with a fixed spray hole, a closure element having an elastic passage which is opened by the pressure of the washing water, **characterized in that** the water pipe (58) is formed elastically and as a closure element (60) at least in a region shortly upstream of a connecting piece of the nozzle body (62).

2. Spray nozzle (68, 70) according to Claim 1, **characterized in that** the water pipe (58) is compressed in the elastic region by a spring element (64).

3. Spray nozzle (68, 70) according to Claim 1 or 2, **characterized in that** a plurality of nozzles (32) are provided in its nozzle body (62).

## Revendications

1. Buse de pulvérisation (68, 70) munie d'une conduite d'eau (58) et d'un corps de buse (62) pour une installation de nettoyage de vitres, comprenant une arrivée d'eau munie en amont d'une buse, d'un orifice de pulvérisation fixe avec un élément de fermeture à passage élastique, ouvert par la pression de l'eau de lavage,
**caractérisée en ce que**
la conduite d'eau (58) est formée comme élément de fermeture (60), élastique dans au moins une zone juste avant le raccord du corps de buse (62).

2. Buse de pulvérisation (68, 70) selon la revendication 1,
**caractérisée en ce que**
la conduite d'eau (58) est comprimée dans la zone élastique par un élément de ressort (64).

3. Buse de pulvérisation (68, 70) selon la revendication 1 ou la revendication 2,
**caractérisée par**
plusieurs buses (32) prévues dans le corps de buses (62).
